Europäisches Patentamt

European Patent Office

Office européen des brevets

(19)

(11) Publication number: **0 092 900**
**A2**

# (12) EUROPEAN PATENT APPLICATION

(21) Application number: **83301152.1**

(22) Date of filing: **03.03.83**

(51) Int. Cl.³: **F 16 G 13/04**

(30) Priority: **23.04.82 US 371349**

(43) Date of publication of application:
**02.11.83 Bulletin 83/44**

(84) Designated Contracting States:
**DE FR GB**

(71) Applicant: **BORG-WARNER CORPORATION**
**200 South Michigan Avenue**
**Chicago Illinois 60604(US)**

(72) Inventor: **McIntosh, Arthur Merton**
**102 N. Waterman Avenue**
**Arlington Heights Illinois 60004(US)**

(74) Representative: **Williams, Trevor John et al,**
**J.A. KEMP & CO. 14 South Square Gray's Inn**
**London WC1R 5EU(GB)**

(54) Improved transmission chain.

(57) An endless power transmission chain (22) comprising sets of interleaved links (28, 30 or 28, 30, 66) joined together by pivot means, the chain being especially adaptable for use with one or more sprockets. The sprockets (10) are formed with teeth having flanks (14, 16) and have root circles (18). The links of each set of links each have a pair of toes (36, 38; 50, 52; 68, 74) joined by a crotch (48; 62; 80). Some sets of links are formed with elongated, reduced width toes to only engage the root circles of the sprockets while other sets of links are formed with toes having flanks to only engage flanks of sprocket teeth. These sets of links may alternate with one another or be randomly intermixed.

Another form of chain has sets of links in which links have one toe formed to engage only the flanks of the sprocket teeth and the other toe formed to only engage the root circle of the sprocket teeth. Generally this form of link is a transitional form, used as sets between sets of links as previously described.

FIG-1

# IMPROVED TRANSMISSION CHAIN

## Description

Chain and sprocket drive arrangements for connecting a vehicle engine and a transmission in a side-by-side arrangement and wherein permissible allowable noise levels are critical have been suggested in the art. Generally, the chains in these drives are of the silent variety in which rows, sets or ranks of links are interconnected to the next adjacent set of links by a pivot means, such as a round pin or pin and rocker, both of which are known in the art. The links of silent chain have a pair of toes joined by a crotch, the toes being usually directed inwardly of the endless chain. The toes of silent chain are defined by flanks which diverge from the bottom to the top of the toes and the body of the links. Measures to reduce noise levels in the chain and sprocket drives for automotive uses suggested by the prior art relate to modifying the teeth of the sprockets. Examples of sprocket teeth modifications can be found in U. S. letters patents to Sand, No. 3,377,875 and Griffel, Nos. 3,495,468 and 4,168,634.

According to the invention to be herein described a noise pattern alternation in a sprocket-chain drive can be achieved by intermixing links of different forms or configurations in the chain. The links either have a flank which engages only the flanks of the sprocket teeth or toes which engage only the root circle of the sprocket teeth. The links in some sets of the chain of this invention are of the flank contacting variety while those in other sets of links are of the root circle contacting variety. The sets of links of the different forms or configurations may alternate with one another or be randomly intermixed.

Another form of chain incorporates transitional links having one toe with a flank to only engage the sprocket tooth flanks while the other toe is formed to only engage the root circle of the sprocket teeth. Transitional sets of links when used in a chain are generally used between the flank and root engaging sets of links.

One way of carrying out the invention is described in detail below with reference to drawings which illustrate only one specific embodiment, in which:-

Fig. 1 is a partial front view which illustrates one form of a chain constructed according to the invention, together with a sprocket;

Fig. 2 is a plan view of a portion of an endless chain constructed according to this invention;

Fig. 3 is a partial front view, similar to Fig. 1, illustrating still another form of chain of this invention;

Fig. 4 is a partial front view, similar to Fig. 1, illustrating still another form of chain of this invention;

Fig. 5 is an elevational view of one form of link in the chains of this invention;

Fig. 6 is an elevational view of another form of link in the chains of this invention; and

Fig. 7 is an elevational view of still another form of link in the chains of this invention.

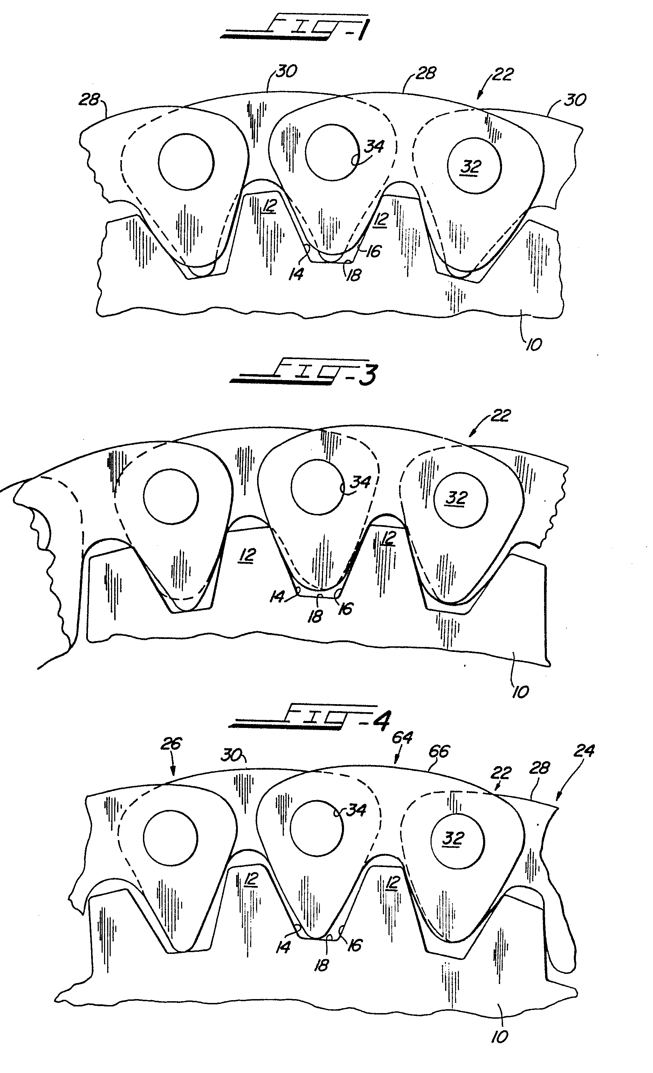

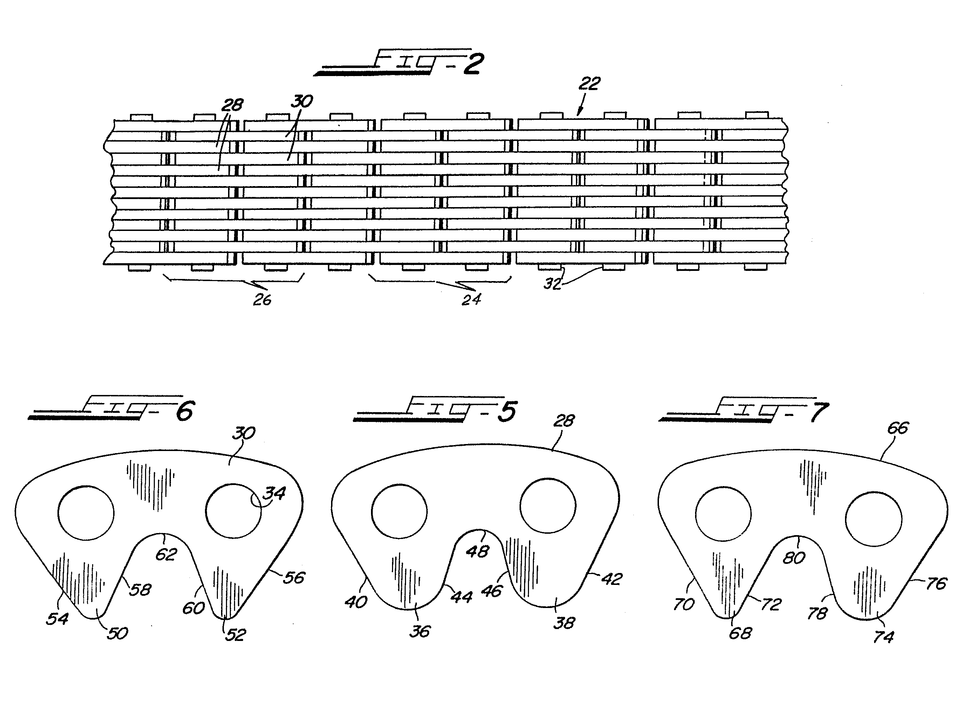

The chain-sprocket combination illustrated in Fig. 1 comprises a conventional sprocket 10 having teeth 12, each of which is defined by flanks 14 and 16, and a root circle 18 at the base of the teeth. The sprocket 10 is rotatable about its center, as is customary. The chain 22, constructed according to this invention, is adapted to wrap the sprocket 10, and is constructed of sets 24 and 26 of interleaved links 28 and 30, respectively (see Fig. 2). A set of links are those links which are transversely aligned with one another in the chain and joined to another set of links by a pivot means. The adjacent sets of links are interconnected by pivot means 32 passing through holes 34 formed in each end of each link. The pivot means 32 is illustrated as a round pin. Other types of joints, such as a pin and rocker joint, as is known in the art, can be used without departing from the spirit of the invention.

The links 28 are illustrated in Fig. 5, and the links 30 are illustrated in Fig. 6. Each link 28 has a pair of toes 36, 38 defined by outside flanks 40, 42 and inside flanks 44, 46, the inside flanks 44, 46 being joined by a crotch 48. The links 28 can be formed so that only outside flanks 40 and 42 drivingly engage the flanks 14 and 16 of the sprocket teeth 12, or so that only the inside flanks 44 and 46 drivingly engage the flanks of the sprocket teeth. In Fig. 6, each link 30 has a pair of elongated toes 50, 52 defined by outside flanks 54, 56 and inside flanks 58, 60, the flanks 58 and 60 being joined by a crotch 62. The toes 50 and 52 are relatively narrow and longer than the corresponding toes of the links 28, so that their terminal ends engage the root circle 18 of the sprocket teeth 12. The flanks of the links 30 are so formed not to engage the flanks of the sprocket teeth.

In the Fig. 1 embodiment of this invention, sets 24 and 26 of links 28 and 30 alternate with one another while in the Fig. 3 embodiment, the sets 24 and 26 of links 28 and 30 are randomly intermixed instead of alternating with one another.

Fig. 4 illustrates still another form of chain 22, in which sets 64 of links 66 are intermixed with sets of links 24 and 26, as above described, either alternately or in a random manner. The links 66 are illustrated in Fig. 7 and formed with an elongated toe 68 defined by an outside flank 70 and an inside flank 72, and a toe 74 defined by an outside flank 76 and an inside flank 78. The flanks 72 and 78 are joined by a crotch 80. The elongated toe 68 is adapted to engage only the root circle 18 of the sprocket 10 while either the flank 70 or 72, depending upon the configuration of the link 66, is adapted to engage the flanks of the sprocket teeth. The links 66 are used primarily for sets of transition links between sets 24 and 26 of links 28 and 30. It is to be understood that sets 64 of links 66 can be intermixed in other ways with sets 24 and 26 of links 28 and 30, if so desired.

The pitch line of a rigid link chain, such as a silent chain, when it meshes with a sprocket, is polygonal rather than circular and gives rise to what is termed "chordal action," because there is a radial as well as a longitudinal component of motion as the chain wraps the sprocket. The engagement action of a chian with the teeth of a sprocket is inherently one of impact which manifests itself as sound peaks generally, in the absence of any modification of the chain or the sprocket, in a regular pattern which can be objectionable to the human ear. By using chains constructed according to this invention, the impact pattern of the chain and sprocket is modified because of the configurations of the mixture of links, resulting in a modification of the pattern of sound peaks in the sound spectrum. The modified sound spectrum thus becomes less, if at all, objectionable to the human ear.

The chain of this invention has been described as being constructed of sets or ranks of links of particular configuration. In addition to the links as described, links well known in the art as guide links may also be used. These links do not have toes separated by a crotch, and are used to maintain the chain-sprocket meshing relationship. There are generally two varieties of guide links, i.e., outside and inside, differing not in shape, but location in the chain assembly. Either variety could be used in the chain of this invention, if found necessary or desirable.

The use of a chain according to this invention has several advantages over the before cited prior art. The sprockets used can be standard with all teeth substantially the same and thus can be manufactured with generally conventional tooling. Durability of the sprockets is thus enhanced by using all of the teeth with the chain of this invention. The chain is the device which is modified and because of its construction, there are many links which share the wear in contrast to a few sprocket teeth in the prior art.

## CLAIMS

1. In an endless power transmission chain (22) for use with sprockets (10) having a plurality of teeth (12) defined by tooth flanks (14,16) and a root circle (18) at the base of the teeth, the chain being constructed of a plurality of sets (24,26 or 24,26,64) of interleaved links (28,30 or 28,30,66) with adjacent sets joined by pivot means permitting articulation of the chain as it wraps a sprocket, the links each having outside and inside flanks (40,42 and 42,46; 54,56 and 58,60; 70,76 and 72,78) defining a pair of toes (36,38; 50,52; 68,74) joined by a crotch (48;62;80), the improvements comprising:

   first sets of links (24 or 64) in said chain having links (28 or 66) formed with at least one toe with only a flank engaging flanks of said sprocket teeth; and second sets of links in said chain having links formed with at least one toe which is elongated and only engages the root circle of said sprocket.

2. A chain as recited in Claim 1, in which said first and second sets of links alternate with one another.

3. A chain as recited in Claim 1, in which said first and second sets of links are randomly intermixed.

5. A chain as recited in Claim 4, in which and further comprising a third set of links joining the links of a first set of links to the links of a second set of links, said third set of links having a pair of toes, one toe of which is formed with a flank to only engage flanks of said sprocket teeth and the other toe of which is elongated to only engage the root circle of said sprocket teeth, said third set of links being a transitional set of links between said first and second sets of links.

6. A chain as recited in Claim 1, having a third set of links, the links of which have a pair of toes, one toe of which is formed to only engage flanks of said sprocket teeth and the other toe of which is elongated to only engage the root circle of said sprocket.

FIG-1

FIG-3

FIG-4

FIG-2

FIG-6

FIG-5

FIG-7